# FASCICULE DE BREVET EUROPEEN

(11) **EP 3 631 563 B1**
(45) Date de publication et mention de la délivrance du brevet: **19.10.2022**
(21) Numéro de dépôt: 18729609.0
(22) Date de dépôt: 25.05.2018
(51) Int. Cl.: G02B 27/01, G02B 7/00

(54) **AFFICHEUR TÊTE HAUTE POUR VÉHICULE AUTOMOBILE**
HEAD-UP-ANZEIGE FÜR KRAFTFAHRZEUG
HEAD-UP DISPLAY FOR MOTOR VEHICLE

(30) Priorité: 29.05.2017 FR 1754708
(43) Date de publication de la demande: 08.04.2020
(73) Titulaire: Valeo Comfort and Driving Assistance, 94046 Créteil Cedex (FR)
(72) Inventeur: DARDELIN, Régis, 94046 Créteil Cedex (FR); BLANC, Eric, 94046 Créteil Cedex (FR)
(74) Mandataire: Delplanque, Arnaud
(86) Numéro de dépôt international: PCT/EP2018/063848
(87) Numéro de publication internationale: WO 2018/219833

(56) Documents cités:
- JP-A- 2007 086 387
- JP-A- 2009 288 484
- Anonymous: "Conductivité thermique - Wikipédia", , 8 février 2018 (2018-02-08), XP055449353, Extrait de l'Internet: URL:https://fr.wikipedia.org/wiki/Conducti vité_thermique#Métaux [extrait le 2018-02-08]

## Description

### DOMAINE TECHNIQUE AUQUEL SE RAPPORTE L'INVENTION

La présente invention concerne de manière générale le domaine des afficheurs tête haute pour véhicule.

Elle concerne plus particulièrement un afficheur tête haute comprenant au moins une source de lumière, un écran rétroéclairé par ladite source de lumière, et un conduit optique comprenant une première extrémité obturée par ledit écran et une seconde extrémité ouverte, de sorte à laisser passer le faisceau de lumière après traversée de l'écran rétroéclairé.

### ARRIÈRE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer des images et un dispositif de projection des images générées adapté à transmettre ces images vers une lame partiellement transparente placée dans le champ de vision du conducteur.

La plupart des dispositifs de génération d'images utilisés aujourd'hui comprennent une source de lumière rétroéclairant un écran adapté à générer les images. Cet écran absorbe une partie de la lumière qui le rétroéclaire, ce qui provoque son échauffement thermique.

Or, la température de l'écran est critique pour son bon fonctionnement, ce dernier risquant d'être endommagé, voire d'être rendu défectueux, par une température trop élevée. L'échauffement de l'écran peut par conséquent réduire sa durée de vie et conduire à son remplacement.

Il est donc nécessaire de trouver des solutions visant à refroidir l'écran, ou à éviter son échauffement.

On sait que la température de l'écran est en grande partie liée à l'échauffement créé par la source de lumière qui le rétroéclaire.

On connaît ainsi une première solution consistant à placer une sonde de température dans le dispositif de génération d'images, cette sonde étant adaptée à contrôler la température de l'écran et à réguler automatiquement, en fonction de cette température, la puissance générée par la source de lumière.

Cette solution présente un inconvénient majeur en ce que l'utilisateur n'obtient pas toujours un affichage avec le niveau souhaité de luminosité puisque la source de lumière peut être amenée à fonctionner à puissance réduite.

En outre, du fait de la sonde, cette première solution n'est pas optimale en termes d'encombrement du dispositif de génération d'images.

JP2007086387A et JP2009288484 décrivent des afficheurs tête haute de l'état de l'art avec des protections thermiques de l'écran à cristaux liquides.

### OBJET DE L'INVENTION

Afin de remédier aux inconvénients précités de l'état de la technique, la présente invention propose un afficheur tête haute pour véhicule automobile, comprenant un dispositif de génération d'images et un dispositif de protection des images générées.

Plus particulièrement, on propose selon l'invention un afficheur tête haute comprenant au moins une source de lumière émettant un faisceau de lumière, un écran rétroéclairé par le faisceau de lumière et un conduit optique comprenant des parois délimitant une première extrémité obturée par ledit écran et une seconde extrémité ouverte vers l'extérieur, de sorte à laisser passer le faisceau de lumière après traversée de l'écran rétroéclairé.

L'invention se caractérise en ce qu'au moins une paroi du conduit optique recouvre au moins une partie de l'écran rétroéclairé et présente une conductivité thermique égale ou supérieure à la partie de l'écran rétroéclairé qu'elle recouvre, de manière à favoriser la dissipation de la chaleur thermique de l'écran rétroéclairé à travers au moins une partie de ladite paroi. Bien entendu, selon l'invention plusieurs parois du conduit optique peuvent recouvrir l'écran rétroéclairé, de préférence toutes les parois du conduit optique.

Ainsi, le conduit optique est adapté à évacuer dans le conduit optique, par effet de conduction thermique, une partie de la chaleur présente au niveau de l'écran rétroéclairé.

En outre, de manière avantageuse, l'air ambiant présent dans le conduit optique permet, par un mouvement de convection naturelle ou forcé, une meilleure dissipation de la chaleur dans le conduit et/ou une évacuation rapide de la chaleur à l'extérieur du conduit optique par sa seconde extrémité.

D'autres caractéristiques non limitatives et avantageuses du dispositif conforme à l'invention sont les suivantes :
- au moins une partie périphérique de l'écran rétroéclairé recouverte par une paroi du conduit optique, a une conductivité thermique supérieure à 10 W.m⁻¹.K⁻¹, de préférence supérieure à 15 W.m⁻¹.K⁻¹ ;
- au moins une paroi du conduit optique recouvrant au moins une partie périphérique de l'écran rétroéclairé, a une conductivité thermique supérieure à celle de l'écran.
- au moins une partie de la face interne d'une paroi du conduit optique est en contact direct avec une partie périphérique de l'écran rétroéclairé ;
- le conduit optique est en contact direct avec une face arrière de l'écran rétroéclairé et/ou un châssis maintenant ledit écran ;
- le conduit optique comporte un écran de protection obturant une partie du conduit optique, l'écran de protection étant transparent pour le faisceau de lumière émise par la source de lumière ;
- le conduit optique forme un angle délimitant une première zone obturée par l'écran rétroéclairé et une deuxième zone, le conduit optique comportant une surface réfléchissante au niveau dudit angle, de manière à réfléchir le faisceau de lumière émis par la source de lumière, dans la deuxième zone du conduit optique ;
- le conduit optique comprend un écran de protection agencé entre l'écran rétroéclairé et la surface réfléchissante, de manière à obturer une partie de la première zone, l'écran de protection étant transparent pour le faisceau de lumière émis par la source de lumière ;
- au moins une paroi du conduit optique est réalisée en un matériau en polymère(s), de préférence en un matériau en polymère(s) conducteur(s) thermique(s) ;
- au moins une partie d'une face interne du conduit optique absorbe une partie de l'intensité lumineuse du faisceau de lumière émis par la source de lumière ;
- au moins une partie d'une face interne du conduit optique est d'aspect granuleux ;
- le conduit optique comporte au moins une ouverture située entre sa première extrémité et sa seconde extrémité, ladite ouverture étant agencée pour favoriser un mouvement de convection naturelle ou forcé, de l'air présent dans le conduit optique ;
- l'afficheur tête haute comprend une lame semi-transparente, ladite lame étant agencée à l'extérieur du conduit optique et en vis-à-vis de sa seconde extrémité, de manière à permettre à un utilisateur de visualiser le faisceau de lumière passant par l'écran rétroéclairé.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'une coupe longitudinale d'un afficheur tête haute selon l'invention, en position dans un véhicule automobile ; et
- la figure 2 est une représentation schématique d'une coupe longitudinale d'un afficheur tête haute représenté à la figure 1 ;
- la figure 3 est un mode de réalisation alternatif d'un afficheur tête haute représenté à la figure 2 ;
- la figure 4 est un autre mode de réalisation alternatif d'un afficheur tête haute représenté à la figure 2 ;
- la figure 5 est un mode de réalisation alternatif d'un afficheur tête haute représenté à la figure 4.

Dans la suite de la description, les termes « avant » et « arrière » seront utilisés pour désigner le sens de propagation du faisceau de lumière émis par l'afficheur tête haute.

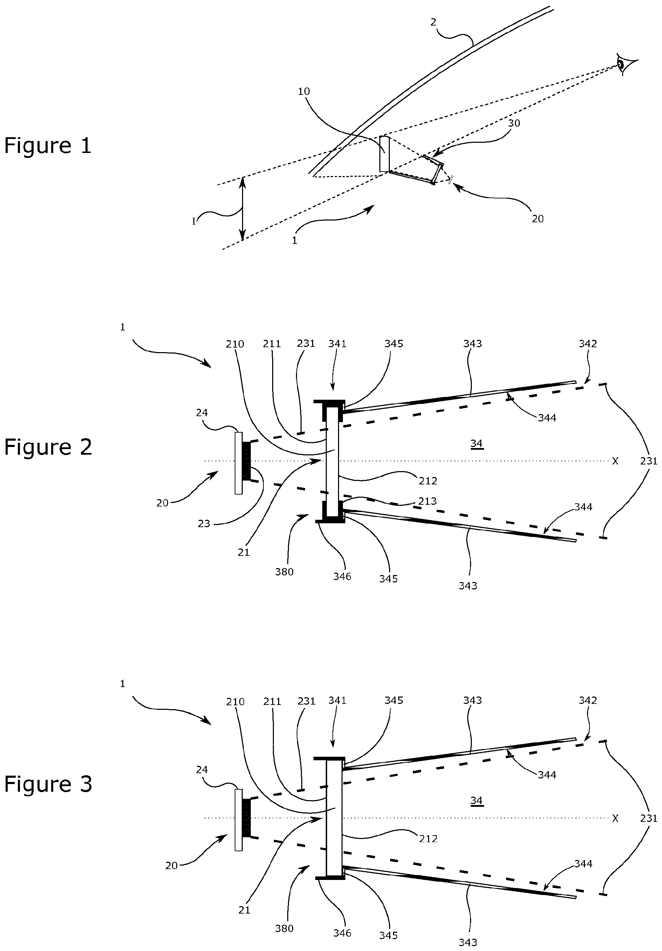

Sur la figure 1, on a représenté les éléments principaux d'un afficheur 1 tête haute selon l'invention, équipant un véhicule automobile.

Un tel afficheur 1 est adapté à créer une image virtuelle I dans le champ de vision du conducteur du véhicule, de sorte qu'il puisse voir cette image virtuelle I et les informations éventuelles qu'elle contient sans avoir à détourner le regard de la route.

À cet effet, l'afficheur 1 comprend une lame partiellement transparente (réalisée ici sous la forme d'un combineur 10), placée entre le parebrise 2 du véhicule et les yeux du conducteur, de manière à être dans son champ de vision. L'afficheur 1 comprend également un dispositif de génération 20 d'images, adapté à générer des images, et un dispositif de projection 30 d'images, adapté à transmettre en direction du combineur 10 les images générées par le dispositif de génération 20. Selon une mode de réalisation alternatif non représenté, le parebrise 2 peut jouer le rôle de lame partiellement transparente 10 de sorte que la présence d'un combineur dédié n'est plus nécessaire pour permettre au conducteur de visualiser les images générées par l'unité de génération d'images.

Sur la figure 2, on a représenté en coupe longitudinale certains éléments de l'afficheur 1 tête haute représenté sur la figure 1. Selon ce premier exemple de réalisation de l'invention, le dispositif de génération 20 d'images comprend ici au moins une source de lumière 23 générant un faisceau de lumière 231. Le faisceau de lumière 231 éclaire un écran rétroéclairé 21 qui est accolé à un conduit optique 34.

Plus précisément, la source de lumière 23 comprend en pratique une pluralité de diodes électroluminescentes (ou LED pour « Light Emitting Diode ») montées sur un support 24. Les LEDs sont ici alignées perpendiculairement au plan de coupe de la figure 2. À titre d'exemple, les LEDs peuvent être agencées selon une ou plusieurs rangées, chaque rangée comprenant entre deux et vingt LEDs sans que ce soit limitatif et arrangées soit en quinconce soit en colonnes. Les LEDs peuvent être aussi multi source, c'est-à-dire que plusieurs sources de lumière peuvent être présentes sur le même composant.

La source de lumière 23 est adaptée pour éclairer à distance l'écran rétroéclairé 21 au niveau d'une face avant 211. Dans l'exemple de réalisation ici proposé, l'écran rétroéclairé 21 comprend une matrice 210 d'éléments de transmittance variable. La matrice 210 peut par exemple être un écran à cristaux liquides (ou LCD pour "Liquid Crystal Display") ou bien un écran à transistors en couche mince (ou TFT pour "Thin-Film Transistor"). La matrice 210 est adaptée à former, lorsque sa face avant 211 est éclairée par le faisceau de lumière 231, les pixels d'une image au niveau d'une face arrière 212 de l'écran. En d'autres termes, le faisceau de lumière 231 émis par la source de lumière 23 est plus ou moins occulté par la matrice 210, de manière à ce que le faisceau de lumière 231 forme une image lorsqu'il est projeté sur un combineur 10. La matrice 210 est maintenue dans un châssis 213 permettant un meilleur maintien et une manipulation plus aisée de la matrice. Dans l'exemple décrit ici, le châssis est réalisé en matériau polymère(s) ou en polyamide chargés de fibre de carbone offrant à la fois une rigidité suffisante et un faible poids. Les matières utilisées se caractérisent par une conductivité thermique supérieure à 10 W.m⁻¹.K⁻¹, de préférence supérieure à 15 W.m⁻¹.K⁻¹ .

Le châssis 213 peut être aussi réalisé à base d'un métal ayant une bonne conductivité thermique ou en plusieurs parties ayant des conductivités thermiques différentes, mais supérieures à 2 W.m⁻¹.K⁻¹, comme par exemple un métal et un plastique.

Comme mentionné ci-dessus, l'écran rétroéclairé 21 est agencé de sorte à obturer le conduit optique 34 au niveau d'une première extrémité 341. Le conduit optique 34 comprend une seconde extrémité 342 (opposée à la première extrémité) ouverte vers l'extérieur et, ici, alignée avec la première extrémité, de sorte à permettre au faisceau de lumière 231 d'éclairer (après traversée de l'écran 21) le combineur 10 (ou autre lame partiellement transparente) présent(e) à l'extérieur du conduit optique 34 (voir la figure 1). En pratique, le conduit optique 34 s'étend selon un axe principal X d'extension et présente une forme globalement évasée, ou tronconique, depuis sa première extrémité 341 vers sa seconde extrémité 342.

Le conduit optique 34 comporte quatre parois 343, dans cet exemple, se faisant face deux à deux, et qui s'étendent légèrement à l'oblique par rapport à l'axe principal X d'extension entre sa première extrémité 341 et sa seconde extrémité 342, de sorte à former un conduit optique clos le long du faisceau de lumière 231.

En pratique, les faces internes 344 des parois 343 présentent un coefficient de réflexion faible. Les faces internes peuvent par exemple être de couleur sombre, de manière à absorber la lumière émise par l'écran rétroéclairé, afin d'éviter la présence de défauts sur les images sortant du conduit optique 34. En variante, les faces internes 344 peuvent présenter un aspect granuleux et/ou être recouvertes d'une couche absorbante.

Au niveau de la première extrémité 341 du conduit optique, chaque paroi 343 est ici prolongée par un méplat 345 qui s'étend vers l'extérieur dudit conduit. Ici, les méplats s'étendent dans un plan globalement parallèle à la face avant 211 de l'écran rétroéclairé 21. Les méplats 345 sont adaptés à accueillir l'écran rétroéclairé 21, tel que représenté en figure 2. Plus précisément, chaque méplat 345 est en contact avec une partie du châssis 213. Chaque méplat 345 est lui-même prolongé par un rebord 346, qui s'étend globalement perpendiculairement audit méplat 345 correspondant, en direction de l'écran rétroéclairé 21. Ainsi, chaque rebord 346 est ici globalement parallèle à l'axe principal X d'extension du conduit optique. La première extrémité 341 du conduit optique est ainsi formée par les quatre méplats 345 et par les quatre rebords 346 prolongeant les quatre parois 343, formant un logement 380 de réception et de maintien du châssis 213 de l'écran rétroéclairé 21. Plus précisément, les rebords 346 forment un cadre autour du châssis 213 lorsque ce dernier est au contact des méplats 345.

Le logement 380 permet ainsi d'intégrer l'écran rétroéclairé 21 au niveau de la première extrémité 341 du conduit optique, de manière à l'obturer. Cela permet avantageusement d'obtenir un afficheur 1 tête haute plus compact et donc plus aisément intégrable dans une planche de bord d'un véhicule automobile.

Selon un autre avantage de l'invention, le logement 380 permet au châssis 213 de l'écran rétroéclairé 21 de prendre appui sur les méplats 345 et les rebords 346, de sorte à former une zone de contact thermique entre le châssis 213 et le conduit optique 34. Selon le présent exemple, le contact thermique est un contact physique entre le châssis 213 et le conduit optique 34, sans couche d'air intermédiaire, de manière à favoriser le transfert de chaleur thermique de l'écran rétroéclairé 21 au conduit optique 34.

Pour que le conduit optique 34 puisse supporter l'écran rétroéclairé 21, tout en assurant une conduction thermique efficace, le conduit optique 34 est réalisé en un matériau à la fois rigide et bon conducteur de chaleur, c'est-à-dire adapté à drainer la chaleur de l'écran rétroéclairé 21 vers les parois 343 du conduit optique 34. Le conduit optique 34 est donc réalisé en un matériau dont la conductivité thermique est égale ou supérieure à la conductivité thermique du châssis 213 de l'écran rétroéclairé 21. Plus précisément, les parois du conduit optique en contact avec le châssis, ont de préférence une conductivité thermique égale ou supérieure à celle du châssis. Ainsi, par un effet de conduction thermique, la chaleur contenue dans l'écran 21 se propage le long des parois 343 du conduit optique et se dissipe à l'intérieur de celui-ci par rayonnement thermique.

Le conduit optique 34 est donc adapté à remplir plusieurs fonctions, à savoir, sa fonction première de conduit optique, de support d'écran rétroéclairé et de radiateur thermique pour ledit écran.

Selon l'exemple illustré à la figure 2, le conduit optique est ouvert au niveau de sa seconde extrémité 342, ce qui favorise, par un phénomène de convection naturelle, un renouvellement de l'air dans le conduit optique 34. De façon avantageuse, l'invention permet donc de dissiper une partie de la chaleur de l'écran rétroéclairé 21 vers l'extérieur, par l'intermédiaire des parois 343 du conduit optique.

Selon le présent exemple, le conduit optique 34 se caractérise par une conductivité thermique supérieure à 10 W.m⁻¹.K⁻¹. Pour cela, le conduit optique peut être réalisé en un matériau métallique tel qu'un alliage métallique, par exemple en Aluminium (ayant une conductivité thermique supérieure à 200 W.m⁻¹.K⁻¹, généralement de l'ordre de 230 W.m⁻¹.K⁻¹) ou en Zamak (aussi appelé Zamac). Si besoin, les parois internes du conduit optique sont recouvertes d'une couche sombre afin de réduire leur coefficient de réflexion comme mentionné ci-dessus.

Selon une autre possibilité, le conduit optique 34 peut être réalisé en un matériau isolant électrique, afin de prévenir l'accumulation de charges électriques sur ses parois. Il peut par exemple être formé à partir de polymère(s), de manière préférée en un matériau en polymère(s) conducteur(s) thermique(s) dont la conductivité thermique est supérieure à 10 W.m⁻¹.K⁻¹, de préférence supérieure à 15 W.m⁻¹.K⁻¹ et de manière préférée comprise entre 15 et 50 W.m⁻¹.K⁻¹. Le conduit optique 34 peut ainsi être réalisé à partir de polymère(s) conducteur(s) thermique(s) commercialisé(s) par la société « CELANESE », sous la référence « Cool Poly ».

En variante, on peut prévoir que le châssis 213 et le conduit optique 34 soient en contact thermique par l'intermédiaire d'un pont thermique, de manière à optimiser la surface de contact entre lesdits éléments et ainsi favoriser un transfert de chaleur plus efficace de l'écran rétroéclairé 21 vers le conduit optique. Ce pont thermique peut être réalisé par exemple par une colle thermique.

En pratique, le conduit optique est fabriqué par moulage. Plus précisément, chaque paroi 343 est moulée avec son méplat 345 et son rebord 346. Chaque paroi 343 forme alors une seule pièce avec le méplat 345 et le rebord 346 correspondants. Les parois 343 sont ensuite assemblées entre elles de façon jointive pour former le conduit optique 34. Un tel assemblage est réalisé par collage ou par soudage selon le matériau utilisé pour mouler les parois. Les faces internes du conduit optique peuvent être grainées et/ou peintes d'une couche sombre, avant ou après l'étape d'assemblage.

En variante encore, le conduit optique 34 muni de ses parois et de sa portion de support est réalisé en une seule pièce, grâce à un moule adapté dans lequel on injecte un matériau à la fois rigide et conducteur thermiquement, tel que mentionné ci-dessus.

En variante encore, le conduit optique est réalisé par surmoulage d'une ou plusieurs pièces métalliques dont au moins une pièce métallique est en contact avec le châssis 213 ou la face arrière 212 de l'écran rétroéclairé 21.

Selon un mode de réalisation alternatif de l'invention illustré à la figure 3, l'écran rétroéclairé 21 peut ne pas comporter de châssis 213 tel que représenté à la figure 2. Dans ce cas, les méplats 345 et les rebords 346 du conduit optique 34 prennent directement appui ou sont alternativement collés via une colle thermique sur la périphérie de la face arrière 212 et les parois latérales de la matrice 210. Au niveau de sa première extrémité 341, le conduit optique se caractérise alors par une conductivité thermique égale ou supérieure à la conductivité thermique des faces de l'écran rétroéclairé 21 qui sont en contact avec les méplats 345 et les rebords 346.

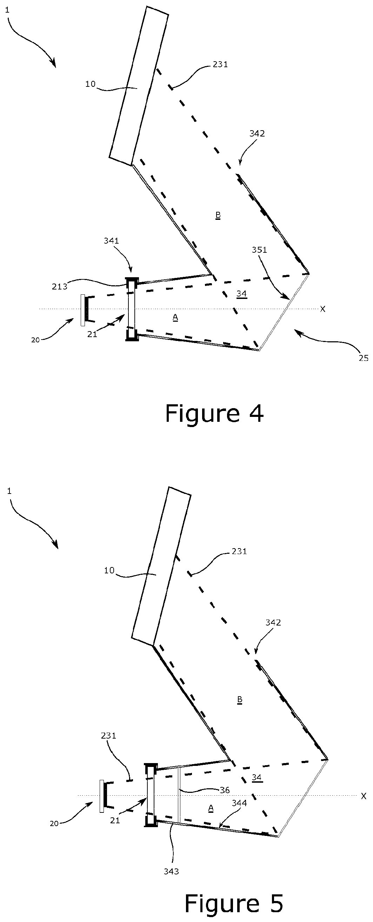

Selon un autre mode de réalisation alternatif de l'invention illustré à la figure 4, le conduit optique 34 représenté à la figure 2 forme un angle 25. Cet angle sépare le conduit optique 34 en une première partie A obturée par l'écran rétroéclairé 21, tel que décrit ci-dessus, d'une deuxième partie B ouverte au niveau de sa seconde extrémité 342. Le conduit optique forme ainsi un coude permettant de réduire son encombrement. Le conduit optique comporte une surface réfléchissante 351 (de type miroir), au niveau dudit angle 25, de manière à réfléchir le faisceau de lumière 231 dans la deuxième partie B du conduit optique, afin qu'un utilisateur puisse visualiser sur un combineur 10 les images formées par l'écran rétroéclairé 21. Comme visible sur la figure 4, le montage de l'écran rétroéclairé 21 sur le conduit optique 34 est ici réalisé conformément à ce qui a été décrit plus haut en référence à la figure 2.

Selon un autre mode de réalisation alternatif de l'invention illustré à la figure 5, le conduit optique 34 représenté à la figure 4 comprend un écran de protection 36 transparent, obturant la première partie A du conduit. Par le terme « transparent », on entend un écran de protection absorbant peu ou pas le faisceau de lumière 231. L'écran de protection 36 est configuré pour protéger l'écran rétroéclairé 21 des poussières ou d'autres éléments susceptibles de pénétrer dans le conduit optique 34. L'écran de protection 36 est de préférence placé au plus proche de l'écran rétroéclairé 21 afin de permettre un plus grand renouvellement de l'air présent dans le conduit optique. Néanmoins, il est aussi envisageable de placer l'écran de protection 36 au niveau de la seconde extrémité 342 du conduit optique 34. De préférence, l'écran de protection 36 est fixé au niveau des faces internes 344 du conduit optique, de sorte à préserver les propriétés de conduction thermiques des parois 343. En d'autres termes, l'écran de protection ne traverse pas lesdites parois.

À présent, différentes variantes de réalisation sont présentées, ces variantes (non illustrées sur les figures) peuvent être combinées ou non, avec un ou plusieurs modes de réalisation alternatifs décrits ci-dessus.

Selon une première variante, le conduit optique 34 peut comprendre une ou plusieurs ouvertures traversant ses parois 343, de manière à favoriser un renouvellement de l'air présent à l'intérieur dudit conduit.

Selon une deuxième variante, le conduit optique 34 comprend des moyens permettant de mettre en mouvement l'air présent dans ledit conduit, de manière à créer un mouvement de convection forcé, favorisant ainsi une dissipation plus rapide de la chaleur thermique de l'écran rétroéclairé 21 dans le conduit optique.

Selon une troisième variante, les parois 343 du conduit optique 34 peuvent prendre toute forme particulièrement adaptée pour transférer la chaleur thermique de l'écran rétroéclairé 21 dans le conduit optique 34 comme par exemple des formes pyramidales aptes à détourner les rayons lumineux parasites et à offrir plus de surfaces d'échange avec l'air du conduit 34.

Selon une quatrième variante, le conduit optique 34 peut comprendre au niveau d'au moins une face externe, une pluralité d'ailettes ou de cylindres de dissipation thermique.

Selon une cinquième variante, le conduit optique 34 peut comprendre un ou plusieurs moyens de guidage optique du faisceau de lumière 231 émis par la source de lumière 23. Par exemple, le conduit optique 34 peut comprendre une ou plusieurs lentilles optiques. Éventuellement, une lentille optique peut être agencée dans le conduit optique de sorte à l'obturer et ainsi jouer le rôle d'écran de protection décrit ci-dessus.

Selon une sixième variante, le conduit optique comprend au niveau de sa première extrémité 341 soit des méplats 345, soit des rebords 346 en contact direct avec l'écran rétroéclairé 21. En d'autres termes, l'écran rétroéclairé 21 peut prendre appui sur le conduit optique 34 uniquement au niveau de sa face arrière 212 ou bien au niveau de ses bords latéraux.

Selon une septième variante, l'écran rétroéclairé 21 avec ou sans son châssis 213 est enfermé par un couvercle assurant un transfert thermique de la face avant 211 vers les parois 343 ou tout élément dissipatif du conduit optique.

## Revendications

1. Afficheur (1) tête haute pour véhicule automobile, comprenant :
- au moins une source de lumière (23) émettant un faisceau de lumière (231) ;
- un écran rétroéclairé (21) par le faisceau de lumière (231) ; et
- un conduit optique (34) comprenant des parois (343) délimitant une première extrémité (341) obturée par ledit écran et une seconde extrémité (342) ouverte vers l'extérieur, de sorte à laisser passer le faisceau de lumière (231) après traversée de l'écran rétroéclairé (21) ;
**caractérisé en ce qu'**au moins une paroi (343) du conduit optique (34) recouvre au moins une partie de l'écran rétroéclairé (21) et présente une conductivité thermique égale ou supérieure à la partie de l'écran rétroéclairé qu'elle recouvre, de manière à favoriser la dissipation de la chaleur thermique de l'écran rétroéclairé à travers au moins une partie de ladite paroi (343).

2. Afficheur (1) tête haute selon la revendication 1, dans lequel au moins une partie périphérique de l'écran rétroéclairé (21), recouverte par une paroi (343) du conduit optique (34), a une conductivité thermique supérieure à 10 W.m⁻¹.K⁻¹.

3. Afficheur (1) tête haute selon la revendication 1 ou 2, dans lequel ladite paroi (343) du conduit optique (34) recouvrant au moins une partie périphérique de l'écran rétroéclairé (21), a une conductivité thermique supérieure à celle de l'écran rétroéclairé (21).

4. Afficheur (1) tête haute selon l'une des revendications précédentes, dans lequel au moins une partie (345, 346) de la face interne (344) d'une paroi (343) du conduit optique (34), est en contact direct avec une partie périphérique de l'écran rétroéclairé (21).

5. Afficheur (1) tête haute selon la revendication précédente, dans lequel le conduit optique (34) est en contact direct avec une face arrière (212) de l'écran rétroéclairé (21) et/ou un châssis (213) maintenant ledit écran.

6. Afficheur (1) tête haute selon l'une des revendications précédentes, dans lequel le conduit optique (34) comporte un écran de protection (36) obturant une partie du conduit optique, l'écran de protection (36) étant transparent pour le faisceau de lumière (231).

7. Afficheur (1) tête haute selon l'une revendications 1 à 4, dans lequel le conduit optique (34) forme un angle (25) délimitant une première zone (A) obturée par l'écran rétroéclairé (21) et une deuxième zone (B), le conduit optique (34) comportant une surface réfléchissante (351) au niveau dudit angle, de manière à réfléchir le faisceau de lumière (231) émis par la source de lumière (23), dans la deuxième zone (B) du conduit optique (34).

8. Afficheur (1) tête haute selon la revendication 7, dans lequel le conduit optique (34) comprend un écran de protection (36) agencé entre l'écran rétroéclairé (21) et la surface réfléchissante (351), de manière à obturer une partie de la première zone (A), l'écran de protection (36) étant transparent pour le faisceau de lumière (231).

9. Afficheur (1) tête haute selon l'une des revendications précédentes, dans lequel au moins une paroi (343) du conduit optique (34) est réalisée en un matériau en polymère(s).

10. Afficheur (1) tête haute selon l'une des revendications précédentes, dans lequel au moins une partie d'une face interne (343) du conduit optique (34) absorbe une partie de l'intensité lumineuse du faisceau de lumière (231).

11. Afficheur (1) tête haute selon l'une des revendications précédentes, dans lequel au moins une partie d'une face interne (343) du conduit optique (34) est d'aspect granuleux.

12. Afficheur (1) tête haute selon l'une des revendications précédentes, dans lequel le conduit optique (34) comporte au moins une ouverture située entre sa première extrémité (341) et sa seconde extrémité (342), ladite ouverture étant agencée pour favoriser un mouvement de convection naturelle ou forcé, de l'air présent dans le conduit optique (34).

13. Afficheur (1) tête haute selon l'une des revendications précédentes, comprenant une lame partiellement transparente (10), ladite lame partiellement transparente étant agencée à l'extérieur du conduit optique (34) et en vis-à-vis de sa seconde extrémité (341), de manière à réfléchir au moins en partie, en direction d'un utilisateur, le faisceau de lumière (231) passant par l'écran rétroéclairé (21).

## Patentansprüche

1. Head-up-Display (1) für ein Kraftfahrzeug, das enthält:
- mindestens eine ein Lichtbündel (231) emittierende Lichtquelle (23);
- einen vom Lichtbündel (231) hintergrundbeleuchteten Bildschirm (21); und
- einen optischen Kanal (34), der Wände (343) enthält, die ein vom Bildschirm verschlossenes erstes Ende (341) und ein nach außen offenes zweites Ende (342) begrenzen, um das Lichtbündel (231) nach der Durchquerung des hintergrundbeleuchteten Bildschirms (21) durchzulassen;
**dadurch gekennzeichnet, dass** mindestens eine Wand (343) des optischen Kanals (34) mindestens einen Teil des hintergrundbeleuchteten Bildschirms (21) bedeckt und eine Wärmeleitfähigkeit gleich dem oder größer als der Teil des hintergrundbeleuchteten Bildschirms aufweist, den sie bedeckt, um die Ableitung der thermischen Wärme des hintergrundbeleuchteten Bildschirms durch mindestens einen Teil der Wand (343) hindurch zu begünstigen.

2. Head-up-Display (1) nach Anspruch 1, wobei mindestens ein Umfangsbereich des hintergrundbeleuchteten Bildschirms (21), der von einer Wand (343) des optischen Kanals (34) bedeckt wird, eine Wärmeleitfähigkeit von mehr als 10 W-m⁻'-K⁻¹ hat.

3. Head-up-Display (1) nach Anspruch 1 oder 2, wobei die Wand (343) des optischen Kanals (34), die mindestens einen Umfangsbereich des hintergrundbeleuchteten Bildschirms (21) bedeckt, eine höhere Wärmeleitfähigkeit als diejenige des hintergrundbeleuchteten Bildschirms (21) hat.

4. Head-up-Display (1) nach einem der vorhergehenden Ansprüche, wobei mindestens ein Teil (345, 346) der Innenseite (344) einer Wand (343) des optischen Kanals (34) in direktem Kontakt mit einem Umfangsbereich des hintergrundbeleuchteten Bildschirms (21) ist.

5. Head-up-Display (1) nach dem vorhergehenden Anspruch, wobei der optische Kanal (34) in direktem Kontakt mit einer Rückseite (212) des hintergrundbeleuchteten Bildschirms (21) und/oder einem den Bildschirm haltenden Rahmen (213) ist.

6. Head-up-Display (1) nach einem der vorhergehenden Ansprüche, wobei der optische Kanal (34) einen Schutzschirm (36) aufweist, der einen Teil des optischen Kanals verschließt, wobei der Schutzschirm (36) für das Lichtbündel (231) durchlässig ist.

7. Head-up-Display (1) nach einem der Ansprüche 1 bis 4, wobei der optische Kanal (34) einen Winkel (25) bildet, der eine erste vom hintergrundbeleuchteten Bildschirm (21) verschlossene Zone (A) und eine zweite Zone (B) begrenzt, wobei der optische Kanal (34) eine reflektierende Fläche (351) im Bereich des Winkels aufweist, um das von der Lichtquelle (23) emittierte Lichtbündel (231) in die zweite Zone (B) des optischen Kanals (34) zu reflektieren.

8. Head-up-Display (1) nach Anspruch 7, wobei der optische Kanal (34) einen Schutzschirm (36) enthält, der zwischen dem hintergrundbeleuchteten Bildschirm (21) und der reflektierenden Fläche (351) angeordnet ist, um einen Teil der ersten Zone (A) zu verschließen, wobei der Schutzschirm (36) für das Lichtbündel (231) durchlässig ist.

9. Head-up-Display (1) nach einem der vorhergehenden Ansprüche, wobei mindestens eine Wand (343) des optischen Kanals (34) aus einem Polymermaterial hergestellt ist.

10. Head-up-Display (1) nach einem der vorhergehenden Ansprüche, wobei mindestens ein Teil einer Innenseite (343) des optischen Kanals (34) einen Teil der Lichtstärke des Lichtbündels (231) absorbiert.

11. Head-up-Display (1) nach einem der vorhergehenden Ansprüche, wobei ein Teil einer Innenseite (343) des optischen Kanals (34) ein körniges Aussehen hat.

12. Head-up-Display (1) nach einem der vorhergehenden Ansprüche, wobei der optische Kanal (34) mindestens eine Öffnung aufweist, die sich zwischen seinem ersten Ende (341) und seinem zweiten Ende (342) befindet, wobei die Öffnung angeordnet ist, um eine natürliche oder erzwungene Konvektionsbewegung der im optischen Kanal (34) vorhandenen Luft zu begünstigen.

13. Head-up-Display (1) nach einem der vorhergehenden Ansprüche, das eine teilweise durchlässige Lamelle (10) enthält, wobei die teilweise durchlässige Lamelle außerhalb des optischen Kanals (34) und gegenüber seinem zweiten Ende (341) angeordnet ist, um das durch den hintergrundbeleuchteten Bildschirm (21) gehende Lichtbündel (231) zumindest zum Teil in Richtung eines Benutzers zu reflektieren.

## Claims

1. Head-up display (1) for a motor vehicle, comprising:
- at least one light source (23) emitting a light beam (231);
- a screen (21) backlit by the light beam (231); and
- an optical duct (34) comprising walls (343) delimiting a first end (341) closed off by said screen and a second end (342) open to the outside, so as to let the light beam (231) through after passing through the backlit screen (21);
**characterized in that** at least one wall (343) of the optical duct (34) covers at least a portion of the backlit screen (21) and has a thermal conductivity equal to or higher than the portion of the backlit screen that it covers, so as to promote the dissipation of heat from the backlit screen through at least a portion of said wall (343) .

2. Head-up display (1) according to Claim 1, in which at least a peripheral portion of the backlit screen (21), covered by a wall (343) of the optical duct (34), has a thermal conductivity higher than 10 W.m⁻1.K⁻¹.

3. Head-up display (1) according to Claim 1 or 2, in which said wall (343) of the optical duct (34) covering at least a peripheral portion of the backlit screen (21) has a higher thermal conductivity than the backlit screen (21).

4. Head-up display (1) according to one of the preceding claims, in which at least a portion (345, 346) of the internal face (344) of a wall (343) of the optical duct (34) is in direct contact with a peripheral portion of the backlit screen (21).

5. Head-up display (1) according to the preceding claim, in which the optical duct (34) is in direct contact with a back face (212) of the backlit screen (21) and/or a frame (213) holding said screen.

6. Head-up display (1) according to one of the preceding claims, in which the optical duct (34) comprises a protective screen (36) closing off a portion of the optical duct, the protective screen (36) being transparent to the light beam (231).

7. Head-up display (1) according to one of Claims 1 to 4, in which the optical duct (34) forms an angle (25) delimiting a first region (A) closed off by the backlit screen (21) and a second region (B), the optical duct (34) comprising a reflective surface (351) at the location of said angle so as to reflect the light beam (231) emitted by the light source (23) into the second region (B) of the optical duct (34) .

8. Head-up display (1) according to Claim 7, in which the optical duct (34) comprises a protective screen (36) arranged between the backlit screen (21) and the reflective surface (351) so as to close off a portion of the first region (A), the protective screen (36) being transparent to the light beam (231) .

9. Head-up display (1) according to one of the preceding claims, wherein at least one wall (343) of the optical duct (34) is made of a material formed of one or more polymers.

10. Head-up display (1) according to one of the preceding claims, wherein at least a portion of an internal face (343) of the optical duct (34) absorbs a portion of the light intensity of the light beam (231) .

11. Head-up display (1) according to one of the preceding claims, in which at least a portion of an internal face (343) of the optical duct (34) has a granular appearance.

12. Head-up display (1) according to one of the preceding claims, in which the optical duct (34) comprises at least one opening located between its first end (341) and its second end (342), said opening being arranged to promote natural or forced movement by convection of the air present in the optical duct (34).

13. Head-up display (1) according to one of the preceding claims, comprising a partially transparent strip (10), said partially transparent strip being arranged outside the optical duct (34) and facing its second end (341) so as to at least partly reflect, in the direction of a user, the light beam (231) passing through the backlit screen (21) .
